# EUROPÄISCHE PATENTANMELDUNG

(11) **EP 4 393 821 A1**
(43) Veröffentlichungstag der Anmeldung: **03.07.2024**
(21) Anmeldenummer: 22217305.6
(22) Anmeldetag: 30.12.2022
(51) Int. Cl.: B64D 13/00, F16L 11/02, F24F 13/02

(54) **FLUGZEUGRUMPF MIT EINEM LUFTVERTEILUNGSSYSTEM**

(71) Anmelder: Airbus Operations GmbH, 21129 Hamburg (DE)
(72) Erfinder: Lohmar, Jens, 21129 Hamburg (DE)

(57) **Zusammenfassung**

Die Erfindung betrifft einen Flugzeugrumpf 10 mit einem Luftverteilungssystem 12, umfassend eine Flugzeugrumpf-Primärstruktur 14, zwei Luftverteilungsstränge 16a, 16b, die in einer Flugzeugrumpflängsrichtung X, im Wesentlichen parallel zueinander und im Wesentlichen nebeneinander angeordnet sind, wobei die Luftverteilungsstränge 16a, 16b jeweils, aus einem fluiddichten und flexiblen Material gebildet sind, sich im Wesentlichen in Flugzeugrumpflängsrichtung X erstrecken, und eine Mehrzahl an lösbaren Befestigungsvorrichtungen 18a, 18b aufweisen, die zur Befestigung der Luftverteilungsstränge 16a, 16b an dem Flugzeugrumpf 10 oder zur Befestigung eines Luftverteilungsstrangs 16a, 16b an dem jeweils anderen Luftverteilungsstrang 16a, 16b geeignet sind, wobei die Befestigungsvorrichtungen 18a, 18b an einem Luftverteilungsstrang 16a, 16b jeweils entlang von mindestens zwei Befestigungslinien 20a, 20b angeordnet sind, die in Stranglängsrichtung L verlaufen und in einer Strangquerrichtung Q voneinander beabstandet sind.

## Beschreibung

### Gebiet der Erfindung

Die Erfindung betrifft ein Flugzeugrumpf mit einem Luftverteilungssystem

Derartige Luftverteilungssysteme werden als ein Bestandteil von Flugzeugklimatisierungssystemen genutzt, die der Einstellung und Aufrechterhaltung der gewünschten Umgebungsbedingungen in der Flugzeugkabine, beispielsweise des Kabinendrucks, der Kabinentemperatur und der Kabinenfeuchtigkeit dienen.

Die Kabine eines Passagierflugzeugs wird üblicherweise sowohl im Flugbetrieb als auch im Bodenbetrieb des Flugzeugs mittels einer flugzeugeigenen Klimaanlage klimatisiert. Der Flugzeugklimaanlage wird beispielsweise den Triebwerkskompressoren oder Hilfstriebwerkskompressoren entnommene Zapfluft zugeführt, die in den Klimaaggregaten, den so genannten Klimapacks der Flugzeugklimaanlage, auf eine gewünschte tiefe Temperatur abgekühlt wird. Die in den Klimapacks der Flugzeugklimaanlage abgekühlte Luft wird in einen Mischer geleitet, wo sie mit aus der Flugzeugkabine abgesaugter Rezirkulationsluft vermischt wird. Die in dem Mischer erzeugte Mischluft aus von den Klimapacks bereitgestellter kalter Frischluft und aus der Flugzeugkabine abgesaugter Rezirkulationsluft wird schließlich zur Klimatisierung der Flugzeugkabine in die Flugzeugkabine eingeleitet.

Bei herkömmlichen Flugzeugklimatisierungssystemen wird die erzeugte Mischluft über ein Luftverteilungssystem in die Flugzeugkabine eingeleitet. Da die zentralen Mischer typischerweise im Unterdeckbereich, insbesondere im Bereich der so genannten "Belly Fairing" des Flugzeugs (in etwa im vorderen Bereich des Flügelmittelkastens), angeordnet sind, gelangt die gemischte Luft zunächst über longitudinal verlaufende Luftverteilungsrohre und dann über Steigrohre (so genannte "Riser Ducts") zu den Passagierbereichen im Oberdeck des Flugzeugs.

Alternativ sind bereits beispielsweise aus der DE 10 2017 112 594 A1 Systeme zur Mischung und Verteilung von Luft in Flugzeugkabinen bekannt, die einen sich im Wesentlichen in einer Kabinenlängsrichtung erstreckenden, fluiddichten Luftverteilungsstrang umfassen. Von derartigen, einteiligen Luftverteilungssträngen zweigen dann weitere, kleine Luftverteilungsrohre in die Flugzeugkabine ab.

Flugzeuge sind typischerweise regelmäßigen Wartungszyklen unterworfen. Bei der Wartung ist häufig auch die Struktur des Flugzeugrumpfs zu inspizieren, d.h. auf Unregelmäßigkeiten jedweder Art zu überprüfen. Hierfür müssen unter Umständen im Rumpfinneren installierte Elemente aufwändig abmontiert und vorübergehend entfernt werden, um für den Inspektionsschritt Zugang zu den relevanten Stellen zu gewähren. Bei den vorbekannten einteiligen Luftverteilungssträngen kann dies teilweise einen erheblichen Aufwand bedeuten.

Es ist die Aufgabe der vorliegenden Erfindung, einen Flugzeugrumpf mit einem Luftverteilungssystem bereitzustellen, der eine einfachere bzw. weniger aufwändige Inspektion und Wartung erlaubt.

### Beschreibung der Erfindung

Die Aufgabe der Erfindung wird gelöst durch einen Flugzeugrumpf mit einem Luftverteilungssystem, umfassend eine Flugzeugrumpf-Primärstruktur, zwei Luftverteilungsstränge, die in einer Flugzeugrumpflängsrichtung, im Wesentlichen parallel zueinander und im Wesentlichen nebeneinander angeordnet sind, wobei die Luftverteilungsstränge jeweils, aus einem fluiddichten und flexiblen Material gebildet sind, sich im Wesentlichen in Flugzeugrumpflängsrichtung erstrecken, und eine Mehrzahl an lösbaren Befestigungsvorrichtungen aufweisen, die zur Befestigung der Luftverteilungsstränge an dem Flugzeugrumpf oder zur Befestigung eines Luftverteilungsstrangs an dem jeweils anderen Luftverteilungsstrang geeignet sind, wobei die Befestigungsvorrichtungen an einem Luftverteilungsstrang jeweils entlang von mindestens zwei Befestigungslinien angeordnet sind, die in Stranglängsrichtung verlaufen und in einer Strangquerrichtung voneinander beabstandet sind. Bei dem erfindungsgemäßen Flugzeugrumpf mit Luftverteilungssystem ergibt sich durch das Vorhandensein zweier räumlich voneinander getrennter Luftverteilungsstränge vorteilhaft die Möglichkeit, die Luftverteilungsstränge lokal oder über größere räumliche Bereiche entweder vom Flugzeugrumpf oder von dem jeweils anderen Luftverteilungsstrang zu lösen (durch das Lösen der jeweiligen Befestigungsvorrichtungen), sodass die Luftverteilungsstränge lokal oder über größere räumliche Bereiche zumindest teilweise von ihren ursprünglichen Einbaustellen wegbewegt oder entfernt werden können. Auf diese Weise kann zumindest teilweise Zugang zu einem Bereich hinter den Luftverteilungssträngen (typischerweise die Innenseite des Flugzeugrumpfs) für Wartungs- und/oder Inspektionszwecke geschaffen werden. Erfindungsgemäß können die Luftverteilungsstränge auch beispielsweise vollständig voneinander und oder von dem Flugzeugrumpf gelöst werden und anschließend aus ihrer Ursprungslage (beispielsweise nach unten) in eine Wartungsposition weggeklappt oder weggeschwenkt werden. Dadurch werden die Bereiche hinter den Luftverteilungssträngen zugänglich.

Dadurch, dass die Luftverteilungsstränge aus einem fluiddichten und flexiblen Material gebildet sind, sind diese grundsätzlich im Hinblick auf ihre Form nachgiebig. Das bedeutet, in einem bedruckten Zustand (wenn Luft während des Betriebs zu Klimatisierungs- und Versorgungszwecken über das Luftverteilungssystem in der Flugzeugkabine verteilt wird) nehmen die Luftverteilungsstränge in der Regel ihr volles Volumen ein. Dann wird typischerweise der volle Querschnitt des Luftverteilungsstrangs ausgefüllt. Im nicht bedruckten Zustand hingegen (z.B. während der Wartung) kann sich die Form der Luftverteilungsstränge prinzipiell ändern und deren Volumen kann sich grundsätzlich verringern. Dann kann der Querschnitt des Luftverteilungsstrangs reduziert sein. Der erfindungsgemäße Flugzeugrumpf mit Luftverteilungssystem kann sich daher zusätzlich zu der Zugänglichkeit über das Lösen von Befestigungsvorrichtungen auch noch zu Nutze machen, dass die Luftverteilungsstränge durch Ablassen von Luft ihr Volumen reduzieren können. Auf diese Weise kann zusätzlicher Raum erschlossen und der Zugang zusätzlich lokal oder über größere räumliche Bereiche erleichtert werden. Bevorzugt können also die Luftverteilungsstränge, von einem ersten Zustand, in dem das flexible Material im Wesentlichen straff ist, in einen zweiten Zustand, in dem das flexible Material im Wesentlichen schlaff ist, wechseln. Während des Betriebs des Luftverteilungssystems wird entsprechend der erste Zustand eingenommen. Um einen räumlichen Bereich in der Nähe der Luftverteilungsstränge zu warten oder zu inspizieren, wird entsprechend der zweite Zustand eingenommen. Der zweite Zustand kann dann gewissermaßen als eine Unterbrechung des ersten (Betriebs-) Zustands aufgefasst werden.

Der erfindungsgemäße Zugang kann wie vorbeschrieben lokal erfolgen, d.h. es ist beispielsweise möglich, dass im schlaffen Zustand des flexiblen Materials lediglich eine vergleichsweise geringe Anzahl an Befestigungsvorrichtungen gelöst wird und somit der entsprechende Zugang lokal begrenzt ist (z.B. für die Größe eines so genannten "Manholes" also einer Öffnung, durch die eine Person bzw. ein Werker hindurchpasst). Der erfindungsgemäße Zugang kann alternativ auch über größere räumliche Bereiche erfolgend, d.h. er kann beispielsweise über eine vergleichsweise große Anzahl an Befestigungsvorrichtungen gelöst werden (z.B. über die Länge mehrerer Sitzreihen hinweg), sodass wesentliche Bereiche der hinter den jeweiligen Luftverteilungssträngen liegenden Struktur freigelegt werden können und inspiziert bzw. gewartet werden können.

Der Grundgedanke der Erfindung, also das Ermöglichen des Zugangs durch das Lösen von Befestigungsvorrichtungen der erfindungsgemäßen Luftverteilungsstränge, ist unabhängig von der gezielten Änderung des Volumens der Luftverteilungsstränge: Auch ohne ein Ablassen von Luft aus den Luftverteilungssträngen, können diese erfindungsgemäß vollständig voneinander und/oder von dem Flugzeugrumpf gelöst werden und anschließend weggeklappt oder weggeschwenkt werden, um die Bereiche hinter den Luftverteilungssträngen zugänglich zu machen.

Ein weiterer Vorteil des erfindungsgemäßen Flugzeugrumpfs mit Luftverteilungssystem ergibt sich durch das Vorsehen zweier Luftverteilungsstränge: Die sich dadurch im Bereich von Single-Aisle-Flugzeugrümpfen (engl. für "Ein-Gang" Flugzeugrümpfe, also Flugzeugrümpfe einer Querschnittsgröße für eine Ein-Gang-Bestuhlung) ergebende Breite der Luftverteilungsstränge in Flugzeugrumpfquerrichtung ist typischerweise auf ein Maß reduziert, das in der Regel kompatibler mit der menschlichen Armlänge ist. Dies verbessert die Ergonomie bei der Wartung oder Installation durch Werker.

Ein zusätzlicher Vorteil des erfindungsgemäßen Flugzeugrumpfs mit Luftverteilungssystem liegt darin, dass bei gelösten Befestigungsvorrichtungen und entsprechend heruntergeklappten oder weggeschwenkten Luftverteilungssträngen diese selbst auf deren Oberseite inspiziert und gegebenenfalls gewartet werden können. Somit können möglicherweise auf der Oberseite aufgetretene Abnutzungen oder Undichtigkeiten in den Luftverteilungssträngen repariert werden, ohne dass der jeweilige Strang demontiert werden und andernorts repariert werden muss.

Grundsätzlich können sich die Luftverteilungsstränge dadurch, dass sie aus einem fluiddichten und flexiblen Material gebildet sind, vorteilhaft an den zur Verfügung stehenden Bauraum bzw. das zur Verfügung stehende Volumen anpassen. Auch lastbedingte Verformungen der Rumpfstruktur können von einem flexiblen Material gut abgefangen bzw. kompensiert werden. Das flexible Material kann prinzipiell eine zusätzliche Isolationsschicht aufweisen oder mit einer solchen versehen sein.

Zusammenfassend kann gesagt werden, dass durch das Vorsehen der erfindungsgemäß mindestens zwei Luftverteilungsstränge Zugang zu Bereichen hinter den Luftverteilungssträngen gewährt werden kann, ohne diese vollständig deinstallieren zu müssen. Auf dieses Weise wird vorteilhaft zumindest verhindert, dass größere Teile eines einzigen Luftverteilungsstrangs (wie im Stand der Technik) deinstalliert werden müssen. Wenn zusätzlich die Luft aus dem Luftverteilungsstrang abgelassen wird, kann die Flexibilität des Luftverteilungsstrangs darüber hinaus für diesen Zugang genutzt werden.

Bei einer bevorzugten Ausführungsform befestigen Befestigungsvorrichtungen, die entlang einer ersten der mindestens zwei Befestigungslinien eines Luftverteilungsstrangs angeordnet sind, den Luftverteilungsstrang an der Flugzeugrumpf-Primärstruktur. Je nach Einbausituation kann es zweckmäßig sein, die Luftverteilungsstränge unmittelbar an der Primärstruktur des Flugzeugrumpfs zu befestigen. Auf diese Weise können Lasten direkt abgetragen werden. Es ist möglich, dass Befestigungsvorrichtungen, die entlang einer ersten Befestigungslinie eines Luftverteilungsstrangs angeordnet sind, diesen Luftverteilungsstrang direkt an der Primärstruktur befestigen und dass Befestigungsvorrichtungen, die entlang einer zweiten Befestigungslinie desselben Luftverteilungsstrangs angeordnet sind, diesen Luftverteilungsstrang ebenfalls an der Primärstruktur befestigen. Als Primärstruktur kommt beispielsweise die Rumpftonne bestehend aus Flugzeugaußenhaut, so genannten "Stringern" und so genannten "Frames" in Frage. Die Befestigungsvorrichtungen könnten beispielsweise an Beschlägen ansetzen bzw. mit solchen verbunden sein, die mit der Primärstruktur fest verbunden sind.

Ebenfalls bevorzugt ist, dass die Befestigungsvorrichtungen, die entlang von zwei unmittelbar nebeneinander angeordneten Befestigungslinien angeordnet sind, insbesondere die entlang von zwei nebeneinander angeordneten Befestigungslinien zweier verschiedener Luftverteilungsstränge, angeordnet sind, aneinander befestigbar sind. Anders ausgedrückt sind die Befestigungsvorrichtungen in diesem Sinne miteinander verbindbar ausgebildet. Auf diese Weise können gleich beide Luftverteilungsstränge lediglich durch das Lösen der Befestigungsvorrichtungen der zwei (unmittelbar) nebeneinander angeordneten Befestigungslinien vorbereitet werden: Nach dem Lösen dieser Befestigungsvorrichtungen können beide Luftverteilungsstränge in vorteilhafter Weise einfach voneinander weggeklappt oder voneinander weggeschwenkt werden, um somit die entsprechenden Bereiche zugänglich zu machen.

Eine bevorzugte Weiterbildung ist dadurch gekennzeichnet, dass der Flugzeugrumpf ferner eine Flugzeugrumpf-Sekundärstruktur umfasst, die an der Flugzeugrumpf-Primärstruktur befestigt ist, wobei Befestigungsvorrichtungen, die entlang einer ersten der mindestens zwei Befestigungslinien eines Luftverteilungsstrangs angeordnet sind, den Luftverteilungsstrang an der Flugzeugrumpf-Sekundärstruktur befestigen. Je nach Einbausituation kann es zweckmäßig sein, die Luftverteilungsstränge unmittelbar an einer Sekundärstruktur des Flugzeugrumpfs zu befestigen. Auf diese Weise können Lasten indirekt abgetragen werden. Es ist möglich, dass Befestigungsvorrichtungen, die entlang einer ersten Befestigungslinie eines Luftverteilungsstrangs angeordnet sind, diesen Luftverteilungsstrang direkt an der Sekundärstruktur befestigen und dass Befestigungsvorrichtungen, die entlang einer zweiten Befestigungslinie desselben Luftverteilungsstrangs angeordnet sind, diesen Luftverteilungsstrang ebenfalls an der Sekundärstruktur befestigen.

Bei einer bevorzugten Weiterbildung der vorhergehenden Ausführungsform ist die Flugzeugrumpf-Sekundärstruktur eine modular aufgebaute Rahmenstruktur zur Aufnahme von Kabinenmonumenten. Eine derartige modular aufgebaute Rahmenstruktur kann z.B. an der äußeren Rumpftonne befestigt sein. Als Kabinenmonumente kommen z.B. Gepäckfächer (Überkopfgepäckfächer) oder dergleichen in Frage.

Bevorzugt ist ferner eine Ausführungsform, bei der die Befestigungsvorrichtungen als Laschen aus einem flexiblen Material ausgebildet sind, insbesondere bei der die Befestigungsvorrichtungen als textile Klettverschluss-Laschen ausgebildet sind. Derartige Laschen haben sich in der Praxis als vorteilhaft erwiesen, da sie einfach und schnell eine lösbare Verbindung bzw. Befestigung ermöglichen. Darüber hinaus erlauben sie häufige Nutzungen ohne ein Nachlassen der Verschluss- bzw. Befestigungswirkung. Alternativ zu dem Klettverschluss-Prinzip sind auch Laschen mit Knopf & Knopflochprinzip sowie Zurrgurte denkbar.

Besonders bevorzugt ist das fluiddichte und flexible Material ein Gewebestoff. Gewebestoffe haben sich in der Praxis bewährt und zeichnen sich durch eine hohe Widerstandsfähigkeit sowie Dichtigkeit und Reißfestigkeit aus.

Eine weitere bevorzugte Ausführungsform ist dadurch gekennzeichnet, dass die Luftverteilungsstränge einen im Wesentlichen ovalen oder länglichen Querschnitt aufweisen. Derartige Querschnittsformen ermöglichen vorteilhat den Einbau in verschiedene Rumpfbereiche moderner Flugzeuge und nutzen den zur Verfügung stehenden Raum bestmöglich aus.

Bevorzugt sind ferner die Luftverteilungsstränge in einem Überkopfbereich eines Oberdecks des Flugzeugrumpfs angeordnet. Wenn die Luftverteilungsstränge im Überkopfbereich angeordnet sind (also beispielsweise unmittelbar im Bereich der Kabinendecke am höchsten Punkt der Kabine), so kann der erfindungsgemäße Zugang besonders einfach erreicht werden, indem beispielsweise Kabinendeckenabdeckungen entfernt und somit die Luftverteilungsstränge unmittelbar erreicht und die Befestigungsvorrichtungen unmittelbar gelöst werden können. Umfangreiche Vorarbeiten, um die Luftverteilungsstränge zu erreichen können damit entfallen. Auch ist nach dem Lösen der Befestigungsvorrichtungen ein zumindest teilweises Herunterklappen der Luftverteilungsstränge besonders einfach. In der Praxis kann auf diese Weise beispielsweise die Flugzeugrumpf-Primärstruktur hinter den Luftverteilungssträngen zugänglich gemacht werden. Somit kann beispielsweise Zugang zu verschiedenen im Bereich der Flugzeugrumpfstruktur angeordneten Antennen gewährt werden.

Schließlich ist eine Ausführungsform bevorzugt, bei der die Luftverteilungsstränge in einem Dreiecksbereich eines Unterdecks des Flugzeugrumpfs angeordnet sind, wobei die Luftverteilungsstränge vertikal angeordnet sind. Bei einer derartigen Anordnung wird grundsätzlich von denselben Vorteilen Gebrauch gemacht wie bei allen vorbeschriebenen Ausführungsformen. Im Unterdeck eines Flugzeugs, wie zum Beispiel einem Cargodeck, also in einem Bereich des Flugzeugrumpfs unterhalb eines Zwischenbodens, befinden sich üblicherweise zwei sogenannte Dreiecksbereiche. Diese sind in einer Querschnittsansicht des Flugzeugs jeweils durch die Außenstruktur des Flugzeugrumpfs (zum Beispiel Spanten und Stringer), die Querholme des Zwischenbodens (zum Beispiel die Träger des Zwischenbodens) und sogenannte Z-Streben, die üblicherweise vertikal zwischen einen Träger des Zwischenbodens und einem Spant verlaufen, definiert und befinden sich für gewöhnlich auf beiden Seiten des Flugzeugs. Die Z-Streben dienen insbesondere der Abstützung des Zwischenbodens in vertikaler Richtung sowie einer Aussteifung der Flugzeugstruktur unterhalb des Zwischenbodens. Die Dreiecksbereiche dienen oft der Verlegung von Leitungen in der Längsrichtung des Flugzeugs. Normalerweise sind keine störenden Komponenten in den Dreiecksbereichen angeordnet, insbesondere in Querrichtung des Flugzeugs, sodass Leitungen vom Bug bis zum Heck des Flugzeugs oder zumindest von den Tragflächen zum Bug bzw. zum Heck des Flugzeugs in den Dreiecksbereichen verlegt werden können. Der Dreiecksbereich eignet sich daher für die Unterbringung von erfindungsgemäßen luftführenden Luftverteilungssträngen.

Die oben beschriebenen Aspekte und weitere Aspekte, Merkmale und Vorteile der Erfindung können ebenfalls aus den Beispielen der Ausführungsform entnommen werden, welche im Folgenden unter Bezugnahme auf die anhängenden Zeichnungen beschrieben wird.

### Beschreibung der Zeichnungen

In den Figuren werden gleiche Bezugszeichen für gleiche oder zumindest ähnliche Elemente, Komponenten oder Aspekte verwendet. Es wird angemerkt, dass im Folgenden Ausführungsformen im Detail beschrieben werden, die lediglich illustrativ und nicht beschränkend sind. In den Ansprüchen schließt das Wort "aufweisend" nicht andere Elemente aus und der unbestimmte Artikel "ein" schließt eine Mehrzahl nicht aus. Alleinig der Umstand, dass bestimmte Merkmale in verschiedenen abhängigen Ansprüchen genannt sind, beschränkt nicht den Gegenstand der Erfindung. Auch Kombinationen dieser Merkmale können vorteilhaft eingesetzt werden. Die Bezugszeichen in den Ansprüchen sollen nicht den Umfang der Ansprüche beschränken. Die Figuren sind nicht maßstäblich zu verstehen sondern haben nur schematischen und illustrativen Charakter. Es zeigen
- Figuren 1a und 1b: einen Querschnitt durch einen oberen Bereich einer ersten Ausführungsform eines erfindungsgemäßen Flugzeugrumpfs mit integrierter Sekundärstruktur in einem ersten Zustand (1a) und einem zweiten Zustand (1b),
- Figur 2: einen Querschnitt durch einen oberen Bereich einer zweiten Ausführungsform eines erfindungsgemäßen Flugzeugrumpfs,
- Figuren 3a und 3b: einen Querschnitt durch einen oberen Bereich einer dritten Ausführungsform eines erfindungsgemäßen Flugzeugrumpfs in einem ersten Zustand (3a) und einem zweiten Zustand (3b),
- Figur 4: einen Querschnitt durch einen oberen Bereich einer vierten Ausführungsform eines erfindungsgemäßen Flugzeugrumpfs,
- Figur 5: eine perspektivische Ansicht, auf zwei nebeneinander angeordnete Luftverteilungsstränge mit einer Mehrzahl an Befestigungsvorrichtungen zur Befestigung an dem jeweils anderen Luftverteilungsstrang,
- Figur 6: eine perspektivische Ansicht auf verschiedene Ausführungen von Befestigungsvorrichtungen, und
- Figur 7: ein Flugzeug mit einem erfindungsgemäßen Rumpf.

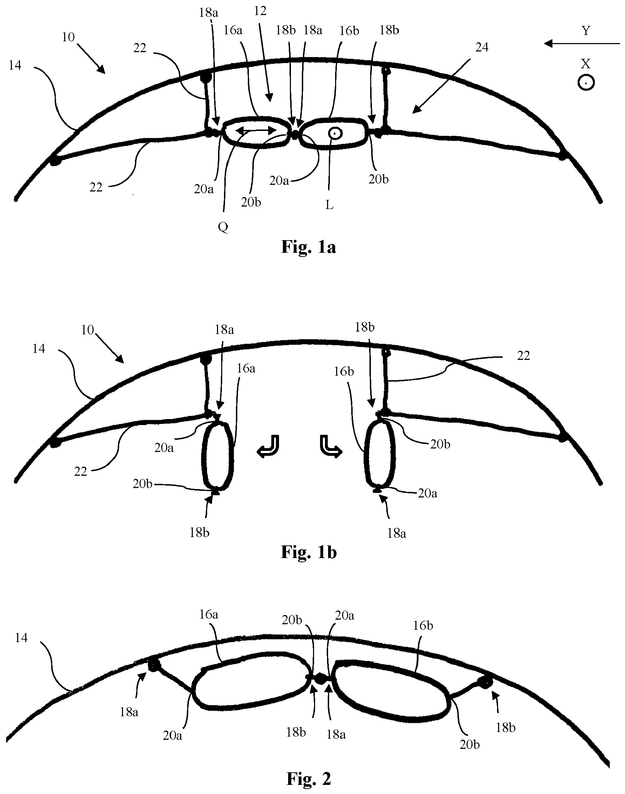

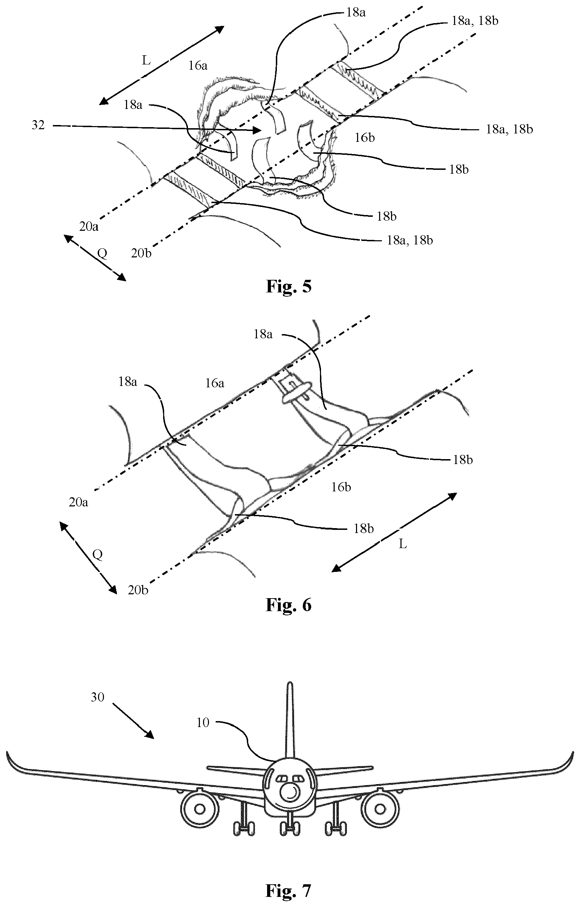

Die **Figuren 1a** und **1b** zeigen einen Flugzeugrumpf 10 mit einem Luftverteilungssystem 12, umfassend eine Flugzeugrumpf-Primärstruktur 14 und zwei Luftverteilungsstränge 16a, 16b, die in einer Flugzeugrumpflängsrichtung X im Wesentlichen parallel zueinander und im Wesentlichen nebeneinander angeordnet sind. Die Luftverteilungsstränge 16a, 16b sind jeweils aus einem fluiddichten und flexiblen Material gebildet, erstrecken sich im Wesentlichen in Flugzeugrumpflängsrichtung X und weisen eine Mehrzahl an lösbaren Befestigungsvorrichtungen 18a, 18b auf (vgl. hierzu auch Figur 5). Das fluiddichte und flexible Material ist typischerweise ein Gewebestoff, wobei die Luftverteilungsstränge 16a, 16b einen im Wesentlichen ovalen oder länglichen Querschnitt aufweisen. Die Befestigungsvorrichtungen 18a, 18b sind zur Befestigung der Luftverteilungsstränge 16a, 16b an dem Flugzeugrumpf 10 geeignet. Alternativ sind die Befestigungsvorrichtungen 18a, 18b zur Befestigung eines Luftverteilungsstrangs 16a an dem jeweils anderen Luftverteilungsstrang 16b (oder umgekehrt) geeignet. Die Befestigungsvorrichtungen 18a, 18b sind an einem Luftverteilungsstrang 16a, 16b jeweils entlang von mindestens zwei Befestigungslinien 20a, 20b angeordnet (in den Figuren 1a und 1b in vertikaler Richtung zur Zeichnungsebene), die in Stranglängsrichtung L (in den Figuren 1a und 1b ebenfalls vertikal zur Zeichnungsebene) verlaufen und in einer Strangquerrichtung Q voneinander beabstandet sind.

Der Flugzeugrumpf 10 umfasst ferner eine Flugzeugrumpf-Sekundärstruktur 22, die an der Primärstruktur 14 befestigt ist. Die Sekundärstruktur 22 ist eine modular aufgebaute Rahmenstruktur zur Aufnahme von Kabinenmonumenten, wie beispielsweise Überkopfgepäckfächer einer Flugzeugkabine (letztere sind in den Figuren 1a und 1b nicht dargestellt).

In der in den Figuren 1a und 1b dargestellten Ausführungsform sind die Luftverteilungsstränge 16a, 16b in einem Überkopfbereich 24 eines Oberdecks des Flugzeugrumpfs 10 angeordnet und die Befestigungsvorrichtungen 18a, 18b, die entlang einer ersten Befestigungslinie 20a, 20b der jeweils zwei Luftverteilungsstränge 16a, 16b angeordnet sind, befestigen den jeweiligen Luftverteilungsstrang 16a, 16b an der Flugzeugrumpf-Sekundärstruktur 22. Ferner sind bei der in den Figuren 1a und 1b dargestellten Ausführungsform die Befestigungsvorrichtungen 18a, 18b, die entlang von zwei nebeneinander angeordneten Befestigungslinien 20a, 20b zweier verschiedener Luftverteilungsstränge 16a, 16b (vgl. hierzu Fig. 1a), angeordnet sind, aneinander befestigbar und lösbar ausgebildet. Mit anderen Worten: Sie sind miteinander verbindbar ausgebildet.

In der Figur 1a sind alle miteinander korrespondierenden Befestigungsvorrichtungen 18a, 18b miteinander verbunden (d.h. die Luftverteilungsstränge 16a, 16b sind sowohl an der Flugzeugrumpf-Sekundärstruktur 22 als auch an dem jeweils anderen Luftverteilungsstrang 16a, 16b befestigt). Dieser erste Zustand entspricht einem normalen Einbau- bzw. Betriebszustand. In diesem ersten Zustand können das Luftverteilungssystem 12 bzw. die Luftverteilungsstränge 16a, 16b bestimmungsgemäß genutzt werden.

In der Figur 1b sind die Befestigungsvorrichtungen 18a, 18b, die entlang der zwei nebeneinander angeordneten Befestigungslinien 20a, 20b der beiden benachbarten Luftverteilungsstränge 16a, 16b angeordnet sind, gelöst (die Befestigungsvorrichtungen 18a, 18b sind geöffnet), sodass die beiden Luftverteilungsstränge 16a, 16b nach unten weggeklappt werden konnten (vgl. gebogene, dicke Pfeile in der Mitte der Fig. 1b). Dieser zweite Zustand entspricht einem Wartungs- bzw. Inspektionszustand. In diesem zweiten Zustand können sowohl die Luftverteilungsstränge 16a, 16b als auch die zuvor dahinter verdeckte Struktur (grundsätzlich sowohl Flugzeugrumpf-Primärstruktur als auch Flugzeugrumpf-Sekundärstruktur) inspiziert und ggf. gewartet werden.

Bei dem Flugzeugrumpf 10 mit Luftverteilungssystem 12 ist es durch das Vorhandensein zweier räumlich voneinander getrennter Luftverteilungsstränge 16a, 16b möglich, die Luftverteilungsstränge 16a, 16b über größere räumliche Bereiche entweder vom Flugzeugrumpf 10 oder von dem jeweils anderen Luftverteilungsstrang 16a, 16b zu lösen (durch das Öffnen bzw. Lösen der entsprechenden Befestigungsvorrichtungen 18a, 18b), sodass die Luftverteilungsstränge 16a, 16b über größere räumliche Bereiche zumindest teilweise von ihren ursprünglichen Einbaustellen wegbewegt oder entfernt werden können. Auf diese Weise kann Zugang zu dem Bereichen hinter den Luftverteilungssträngen 16a, 16b (typischerweise die Innenseite des Flugzeugrumpfs 10) für Wartungs- und/oder Inspektionszwecke geschaffen werden. Wie in der Figur 1b gezeigt, können die Luftverteilungsstränge 16a, 16b voneinander gelöst werden und somit in eine Wartungsposition verschwenkt werden.

In **Figur 2** ist im Unterschied zu den Figuren 1a und 1b keine Sekundärstruktur 22 vorgesehen und daher sind die Luftverteilungsstränge 16a, 16b stattdessen über die Befestigungsvorrichtungen 18a, 18b, die entlang der äußeren beiden Befestigungslinien 20a, 20b angeordnet sind, direkt an der Flugzeugrumpf-Primärstruktur 14 befestigt. Somit befestigen Befestigungsvorrichtungen 18a, 18b, die entlang einer ersten der mindestens zwei Befestigungslinien 20a, 20b eines Luftverteilungsstrangs 16a,16b angeordnet sind, den Luftverteilungsstrang 16a, 16b an der Flugzeugrumpf-Primärstruktur 14. Befestigungsvorrichtungen 18a, 18b, die entlang der zwei unmittelbar nebeneinander angeordneten Befestigungslinien 20a, 20b der beiden Luftverteilungsstränge 16a, 16b angeordnet sind, sind in der Figur 2 miteinander verbunden. Es versteht sich, dass durch Lösen dieser mittigen Befestigungsvorrichtungen 18a, 18b, ähnlich der Figur 1b, ein Zustand hergestellt werden kann, in dem die Luftverteilungsstränge 16a, 16b ebenfalls nach unten weggeklappt werden können (nicht dargestellt).

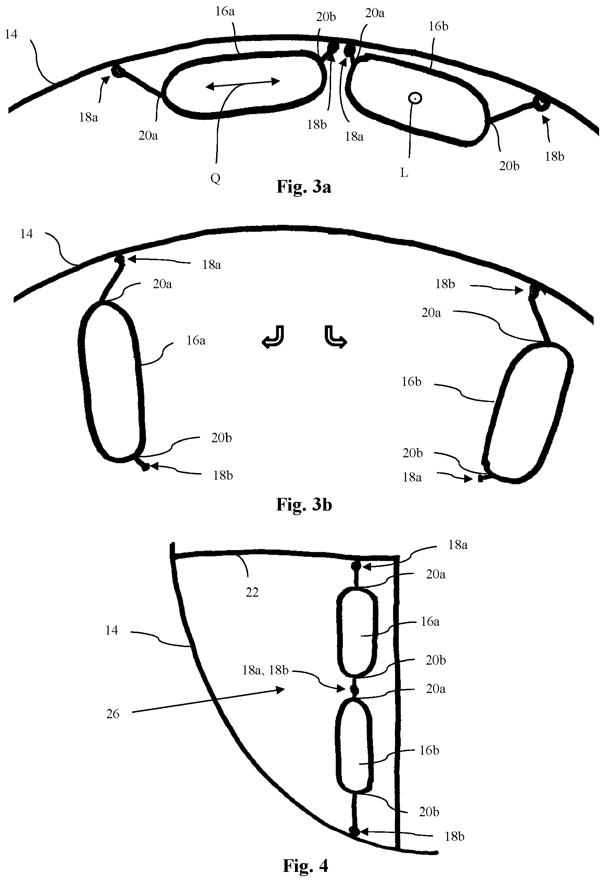

Die **Figuren 3a** und **3b** zeigen, ähnlich der Figur 1, einen Flugzeugrumpf 10 mit einem Luftverteilungssystem 12, umfassend eine Flugzeugrumpf-Primärstruktur 14 und zwei Luftverteilungsstränge 16a, 16b, die in einer Flugzeugrumpflängsrichtung X, im Wesentlichen parallel zueinander und im Wesentlichen nebeneinander angeordnet sind. Die Luftverteilungsstränge 16a, 16b sind jeweils, aus einem fluiddichten und flexiblen Material gebildet, erstrecken sich im Wesentlichen in Flugzeugrumpflängsrichtung X, und weisen eine Mehrzahl an lösbaren Befestigungsvorrichtungen 18a, 18b auf. Die Befestigungsvorrichtungen 18a, 18b sind zur Befestigung der Luftverteilungsstränge 16a, 16b an dem Flugzeugrumpf 10 geeignet. Alternativ sind die Befestigungsvorrichtungen 18a, 18b zur Befestigung eines Luftverteilungsstrangs 16a, 16b an dem jeweils anderen Luftverteilungsstrang 16a, 16b geeignet. Die Befestigungsvorrichtungen 18a, 18b sind an einem Luftverteilungsstrang 16a, 16b jeweils entlang von mindestens zwei Befestigungslinien 20a, 20b angeordnet, die in Stranglängsrichtung L verlaufen und in einer Strangquerrichtung Q voneinander beabstandet sind.

In der in den Figuren 3a und 3b dargestellten Ausführungsform verbinden Befestigungsvorrichtungen 18a, 18b, die entlang einer ersten Befestigungslinie 20a, 20b der jeweils zwei Luftverteilungsstränge 16a, 16b angeordnet sind, den jeweiligen Luftverteilungsstrang 16a, 16b an der Flugzeugrumpf-Primärstruktur 14. Ferner verbinden bei der in den Figuren 3a und 3b dargestellten Ausführungsform die Befestigungsvorrichtungen 18a, 18b, die entlang der jeweils anderen, zweiten Befestigungslinie 20a, 20b angeordnet sind, den jeweiligen Luftverteilungsstrang 16a, 16b zusätzlich an der Flugzeugrumpf-Primärstruktur 14.

In der Figur 3a sind Befestigungsvorrichtungen 18a, 18b an der Flugzeugrumpf-Primärstruktur 14 befestigt. Dieser erste Zustand entspricht einem normalen Einbau- bzw. Betriebszustand. In diesem ersten Zustand können das Luftverteilungssystem 12 bzw. die Luftverteilungsstränge 16a, 16b bestimmungsgemäß genutzt werden.

In der Figur 3b sind die Befestigungsvorrichtungen 18a, 18b, die normalerweise in der Nähe des benachbarten Luftverteilungsstrangs 16a, 16b an der Flugzeugrumpf-Primärstruktur befestigt sind (vgl. Fig. 3a), stattdessen gelöst (die entsprechenden Befestigungsvorrichtungen 18a, 18b sind geöffnet), sodass die beiden Luftverteilungsstränge 16a, 16b nach unten weggeklappt werden konnten. Dieser zweite Zustand entspricht einem Wartungs- bzw. Inspektionszustand. In diesem zweiten Zustand können sowohl die Luftverteilungsstränge 16a, 16b als auch die zuvor dahinter verdeckte Flugzeugstruktur inspiziert und ggf. gewartet werden.

In der **Figur 4** sind die Luftverteilungsstränge 16a, 16b alternativ in einem Dreiecksbereich 26 eines Unterdecks des Flugzeugrumpfs 10 angeordnet. Dabei sind die Luftverteilungsstränge 16a, 16b vertikal übereinander angeordnet. Befestigungsvorrichtungen 18a, 18b, die entlang der zwei unmittelbar übereinander angeordneten Befestigungslinien 20a, 20b der beiden Luftverteilungsstränge 16a, 16b angeordnet sind, sind in der Figur 4 miteinander verbunden dargestellt. Es versteht sich, dass durch Lösen dieser mittigen Befestigungsvorrichtungen 18a, 18b, ähnlich wie bei der Figur 1b, ein Zustand hergestellt werden kann, in dem die Luftverteilungsstränge 16a, 16b auch voneinander weggeklappt werden können (nicht dargestellt). Beispielsweise könnte der untere Luftverteilungsstrang 16a, 16b nach links in Richtung der Außenhaut weggeklappt werden, sodass der Bereich hinter den so genannten Z-Streben zugänglich wird. Der obere Luftverteilungsstrang könnte entsprechend nach oben verschwenkt werden (und müsste mit geeigneten Mitteln dort vorübergehend gehaltert werden), um ebenfalls den Bereich hinter den so genannten Z-Streben zugänglich zu machen.

Die **Figur 5** zeigt eine perspektivische Ansicht, auf zwei nebeneinander angeordnete Luftverteilungsstränge 16a, 16b mit einer Mehrzahl an Befestigungsvorrichtungen 18a, 18b zur Befestigung an dem jeweils anderen Luftverteilungsstrang 16a, 16b. Die Befestigungsvorrichtungen 18a, 18b sind zur Befestigung eines Luftverteilungsstrangs 16a, 16b an dem jeweils anderen Luftverteilungsstrang 16a, 16b geeignet. In der Figur 5 sind je Luftverteilungsstrang 16a, 16b jeweils nur eine Befestigungslinie 20a, 20b dargestellt, entlang derer Befestigungsvorrichtungen 18a, 18b angeordnet und an den jeweiligen Luftverteilungssträngen 16a, 16b ausgebildet sind. Es versteht sich jedoch, dass jeder Luftverteilungsstrang 16a, 16b ferner zumindest eine weitere (in der Fig. 5 nicht dargestellte) Befestigungslinie 20a, 20b aufweist, entlang derer weitere Befestigungsvorrichtungen 18a, 18b angeordnet und ausgebildet sind. Diese Befestigungslinien 20a, 20b sind in der Strangquerrichtung Q voneinander beabstandet angeordnet. Die Befestigungslinien 20a, 20b verlaufen in Stranglängsrichtung L und zueinander parallel. In der Fig. 5 sind beispielhaft in Stranglängsrichtung L pro Luftverteilungsstrang 16a, 16b sechs Befestigungsvorrichtungen 18a, 18b dargestellt. Davon sind die jeweils mittleren zwei Befestigungsvorrichtungen 18a, 18b in einem gelösten (nicht miteinander verbundenen bzw. nicht aneinander befestigten) Zustand gezeigt. Die anderen, äußeren Befestigungsvorrichtungen 18a, 18b sind jeweils mit gegenüberliegenden Befestigungsvorrichtungen 18a, 18b in einem miteinander verbundenen bzw. aneinander befestigten Zustand gezeigt. Auf diese Weise erfolgt der erfindungsgemäße Zugang, wie vorbeschrieben lokal, d.h. es ist möglich, dass im schlaffen Zustand des flexiblen Materials beispielsweise eine Öffnung 32 gebildet wird, durch die Werker hindurchpassen und somit Bereiche hinter den Luftverteilungssträngen 16a, 16b inspizieren können.

In **Figur 6** sind zwei unterschiedliche Ausführungen von Befestigungsvorrichtungen 18a, 18b dargestellt. Bei beiden Ausführungen sind die Befestigungsvorrichtungen als Laschen 18a, 18b aus einem flexiblen Material ausgebildet. Die Befestigungsvorrichtung 18a, 18b kann als eine Laschen- und Klettverschlussprinzip (Seite links unten von Figur 6) ausgebildet sein oder alternativ als eine Lasche mit Knopf & Knopflochprinzip (Seite rechts oben von Figur 6). Weiter alternativ kann die Befestigungsvorrichtung 18a, 18b auch durch Zurrgurte verwirklicht werden (nicht dargestellt).

Die **Figur 7** zeigt schließlich ein Flugzeug 30 mit einem erfindungsgemäßen Flugzeugrumpf 10.

## Patentansprüche

1. Flugzeugrumpf (10) mit einem Luftverteilungssystem (12), umfassend:
eine Flugzeugrumpf-Primärstruktur (14),
zwei Luftverteilungsstränge (16a, 16b), die
in einer Flugzeugrumpflängsrichtung (X),
im Wesentlichen parallel zueinander und
im Wesentlichen nebeneinander
angeordnet sind,
wobei die Luftverteilungsstränge (16a, 16b) jeweils,
aus einem fluiddichten und flexiblen Material gebildet sind, sich im Wesentlichen in Flugzeugrumpflängsrichtung (X) erstrecken, und
eine Mehrzahl an lösbaren Befestigungsvorrichtungen (18a, 18b) aufweisen, die
zur Befestigung der Luftverteilungsstränge (16a, 16b) an dem Flugzeugrumpf (10) oder
zur Befestigung eines Luftverteilungsstrangs (16a, 16b) an dem jeweils anderen Luftverteilungsstrang (16a, 16b) geeignet sind, wobei
die Befestigungsvorrichtungen (18a, 18b) an einem Luftverteilungsstrang (16a, 16b) jeweils entlang von mindestens zwei Befestigungslinien (20a, 20b) angeordnet sind, die in Stranglängsrichtung (L) verlaufen und in einer Strangquerrichtung (Q) voneinander beabstandet sind.

2. Flugzeugrumpf (10) nach Anspruch 1, **dadurch gekennzeichnet, dass** Befestigungsvorrichtungen (18a, 18b), die entlang einer ersten der mindestens zwei Befestigungslinien (20a, 20b) eines Luftverteilungsstrangs (16a, 16b) angeordnet sind, den Luftverteilungsstrang (16a, 16b) an der Flugzeugrumpf-Primärstruktur (14) befestigen.

3. Flugzeugrumpf (10) nach Anspruch 1 oder 2, **dadurch gekennzeichnet, dass** die Befestigungsvorrichtungen (18a, 18b), die entlang von zwei unmittelbar nebeneinander angeordneten Befestigungslinien (20a, 20b) angeordnet sind, insbesondere die entlang von zwei nebeneinander angeordneten Befestigungslinien (20a, 20b) zweier verschiedener Luftverteilungsstränge (16a, 16b), angeordnet sind, aneinander befestigbar sind.

4. Flugzeugrumpf (10) nach Anspruch 1 oder 3, **dadurch gekennzeichnet, dass** der Flugzeugrumpf (10) ferner eine Flugzeugrumpf-Sekundärstruktur (22) umfasst, die an der Flugzeugrumpf-Primärstruktur (14) befestigt ist, wobei Befestigungsvorrichtungen (18a, 18b), die entlang einer ersten der mindestens zwei Befestigungslinien (20a, 20b) eines Luftverteilungsstrangs (16a, 16b) angeordnet sind, den Luftverteilungsstrang (16a, 16b) an der Flugzeugrumpf-Sekundärstruktur (22) befestigen.

5. Flugzeugrumpf (10) nach Anspruch 4, **dadurch gekennzeichnet, dass** die Flugzeugrumpf-Sekundärstruktur (22) eine modular aufgebaute Rahmenstruktur zur Aufnahme von Kabinenmonumenten ist.

6. Flugzeugrumpf (10) nach einem der vorhergehenden Ansprüche, **dadurch gekennzeichnet, dass** die Befestigungsvorrichtungen als Laschen (16a, 16b) aus einem flexiblen Material ausgebildet sind, insbesondere dass die Befestigungsvorrichtungen als textile Klettverschluss-Laschen (16a, 16b) ausgebildet sind.

7. Flugzeugrumpf (10) nach einem der vorhergehenden Ansprüche, **dadurch gekennzeichnet, dass** das fluiddichte und flexible Material ein Gewebestoff ist.

8. Flugzeugrumpf (10) nach einem der vorhergehenden Ansprüche, **dadurch gekennzeichnet, dass** die Luftverteilungsstränge (16a, 16b) einen im Wesentlichen ovalen oder länglichen Querschnitt aufweisen.

9. Flugzeugrumpf (10) nach einem der vorhergehenden Ansprüche, **dadurch gekennzeichnet, dass** die Luftverteilungsstränge (16a, 16b) in einem Überkopfbereich (24) eines Oberdecks des Flugzeugrumpfs (10) angeordnet sind.

10. Flugzeugrumpf (10) nach Anspruch 1 bis 8, **dadurch gekennzeichnet, dass** die Luftverteilungsstränge (16a, 16b) in einem Dreiecksbereich (26) eines Unterdecks des Flugzeugrumpfs (10) angeordnet sind, wobei die Luftverteilungsstränge (16a, 16b) vertikal angeordnet sind.
